# EUROPEAN PATENT SPECIFICATION

(11) **EP 3 734 933 B1**
(45) Date of publication and mention of the grant of the patent: **26.01.2022**
(21) Application number: 20726272.6
(22) Date of filing: 12.02.2020
(51) Int. Cl.: H04L 29/08, H04L 29/12

(54) **RESOURCE ACQUISITION METHOD, SERVER AND STORAGE MEDIUM**
RESSOURCENERFASSUNGSVERFAHREN, SERVER UND SPEICHERMEDIUM
PROCÉDÉ D'ACQUISITION DE RESSOURCES, SERVEUR ET SUPPORT DE STOCKAGE

(30) Priority: 05.03.2019 CN 201910164233
(43) Date of publication of application: 04.11.2020
(73) Proprietor: Wangsu Science & Technology Co., Ltd., Shanghai 200030 (CN)
(72) Inventor: CHEN, Long, Xuhui District Shanghai 200030 (CN)
(74) Representative: Würmser, Julian
(86) International application number: PCT/CN2020/074947
(87) International publication number: WO 2020/177511

(56) References cited:
- CN-A- 103 856 408
- CN-A- 106 790 503
- CN-A- 109 981 595
- US-A1- 2013 212 240
- US-A1- 2013 212 240
- US-A1- 2018 262 351
- US-A1- 2018 331 997

## Description

### TECHNICAL FIELD

The present disclosure relates to Internet technologies and in particular to a method for acquiring a resource, a server and a storage medium.

### BACKGROUND

At present, Internet technology has been widely used, and the Internet protocol used in the process of the Internet communication is still in a low version stage, that is, Internet Protocol Version 4 (IPv4). When upgrading the Internet protocol from IPv4 to the Internet protocol with a higher version, i.e. Internet Protocol Version 6 (IPv6), it is necessary to use both protocols at the same time for a period of time based on a stepwise and steady developmental principle. During this period, the Internet protocol may gradually evolve from IPv4 to IPv6 by using transition technology.

There are many resources in a web interface of the Internet, such as hyper text markup language (HTML) files, javascript (JS) files, cascading style sheets (CSS) files and the like. There are various link addresses in such resource files, and the link address may be represented by a relative path or an absolute path. Herein, the link address represented by the relative path belongs to a local domain address and is called as a local domain link address, and the link address represented by the absolute path is classified into a local domain link address and a non-local domain link address according to the domain name to which the link address belongs. And the non-local domain link address therein is the link address that is represented by the absolute path and does not belong to the local domain. For example, if a domain name address corresponding to website A is "www.abc.com" and a domain name address corresponding to website B is "www.dfg.net", the domain corresponding to website A is not the same as the domain corresponding to website B, and the domain name address corresponding to website A is the non-local domain link address with respect to the domain name address corresponding to website B. IPv4/IPv6 dual stack has already been supported in the traditional content delivery network (CDN), and if a client needs the whole website to be able to support the IPv6 protocol, the upgrade of the network protocol from IPv4 to IPv6 may be realized simply by accessing the client's website to the CDN.

The inventor finds that the existing technology at least has the following problems. The traditional CDN only supports the coverage of dual stack of the local domain link address but fails to cover the non-local domain link address. If the non-local domain link address is widely used in a website and the website supports IPv6 for communication, most resources may be inaccessible, thus resulting in abnormal web page display.

Patent application US 2013/212240 A1 discloses relevant technology regarding dynamic DNS64 and patent application US 2018262351 A1 discloses relevant technology regarding URL generation and domain name resolving.

### SUMMARY

The object of embodiments of the present disclosure is to provide a method for acquiring a resource, a server and a storage medium to solve the problem of abnormal web page display caused by the inability to access a web page with a non-local domain link address in a website supporting IPv6.

The invention is set out in the appended set of claims. An embodiment of the present disclosure provides a method for acquiring a resource, applied to a rewrite server, which includes the following steps: receiving a resource request message sent by a content delivery network server based on a first Internet protocol, where the resource request message includes a domain name address of the resource that is requested; determining that the domain name address belongs to a preset domain name, then decoding the domain name address to obtain an original domain name address, where the original domain name address is used to access a resource server supporting a second Internet protocol; and acquiring the resource from the resource server based on the original domain name address.

Embodiments of the present disclosure also provide a server, which includes: at least one processor, and a memory in communicative connection with the at least one processor; where the memory stores an instruction executable by the at least one processor, and the instruction is executed by the at least one processor to cause the at least one processor to perform the method for acquiring the resource described above.

Embodiments of the present disclosure also provide a computer readable storage medium storing a computer program, where the computer program, when executed by a processor, performs the method for acquiring the resource described above.

Compared with the existing technologies, by introducing the rewrite server between the CDN server and the resource server, the embodiments of the present disclosure enable the domain name address of the resource requested by a client which belongs to the preset domain name to be directed to the resource server corresponding to the resource that is requested through the rewrite server, without changing a function of each of internal nodes in the CDN network or changing the way the resource server processes contents of a page file. In this case, resources that are not in the same domain may be accessed by the client, thereby improving the customer experience, reducing the cost, and upgrading the Internet communication protocol supported by the website.

In one embodiment, a version of the first Internet protocol is higher than that of the second Internet protocol.

In one embodiment, the first Internet protocol is Internet Protocol Version 6, IPv6.

In one embodiment, the domain name address of the resource belongs to a white list, and the white list includes a preset domain name supporting domain name conversion.

In this embodiment, the white list is set in advance, and the domain name address of the resource that is requested may be converted through the rewrite server if it is determined that the domain name address of the resource that is requested is in the white list, so that the rewrite server may be directed to the resource server corresponding to the resource that is requested, thus acquiring the resource that is requested.

In one embodiment, the resource request message further includes an Internet protocol address and a port number of the resource server.

In this embodiment, the resource server corresponding to the resource that is requested may be accessed and the resource that is requested may be obtained through the Internet protocol address and port number of the resource server included in the resource request message.

In one embodiment, decoding the domain name address to obtain the original domain name address includes: replacing a special character in the domain name address with a dot separator, where the special character is any character in a set of characters allowed by an international domain name other than the dot separator; and determining the original domain name address according to a replaced domain name address and the preset domain name.

In this embodiment, the special character in the domain name address is replaced by the dot separator, and the domain name address in which the special character has been replaced is combined with the preset domain name to obtain the original domain name address. The resource required by the client is obtained from the resource server corresponding to the resource that is requested according to the original domain name address, so that the client in an IPv6 environment may access the resource that is not in the same domain as the client, thus bringing good customer experience to customers.

In one embodiment, determining the original domain name address according to the replaced domain name address and the preset domain name includes: deleting the preset domain name contained in the replaced domain name address to obtain the original domain name address.

Embodiments of the present disclosure further provide a method for returning a resource, applied to a rewrite server, which includes the following steps: receiving a response message returned by a resource server, where the response message carries the resource obtained according to a first domain name address; encoding a second domain name address in the resource to obtain an encoded domain name address, where the first domain name address and the second domain name address do not belong to the same domain and the encoded domain name address belongs to a preset domain name; and updating the resource according to the encoded domain name address and returning the resource that is updated to a client through a content delivery network server.

Embodiments of the present disclosure also provide a server, which includes: at least one processor, and a memory in communicative connection with the at least one processor; where the memory stores an instruction executable by the at least one processor, and the instruction is executed by the at least one processor to cause the at least one processor to perform the method for returning the resource described above.

Embodiments of the present disclosure also provide a computer readable storage medium storing a computer program, where the computer program, when executed by a processor, performs the method for returning the resource described above.

Compared with the existing technologies, by introducing the rewrite server between the CDN server and the resource server, the embodiments of the present disclosure enable the domain name address of the resource requested by a client which belongs to the preset domain name to be directed to the resource server corresponding to the resource that is requested through the rewrite server, without changing a function of each of internal nodes in the CDN network or changing the way the resource server processes contents of a page file. In this case, resources that are not in the same domain may be accessed by the client, thereby improving the customer experience, reduce the cost, and upgrading the Internet communication protocol supported by the website.

In one embodiment, the first domain name address is used to access the resource server supporting a first Internet protocol, and the second domain name address is used to access the resource server supporting a second Internet protocol.

In one embodiment, a version of the first Internet protocol is higher than that of the second Internet protocol.

In one embodiment, the first Internet protocol is Internet Protocol Version 6, IPv6.

In one embodiment, updating the resource according to the encoded domain name address includes: replacing the second domain name address in the resource with the encoded domain name address to obtain the resource that is updated.

In one embodiment, after receiving the response message returned by the resource server and before encoding the second domain name address in the resource to obtain the encoded domain name address, the method further includes: determining that a type of the resource is a text-type according to a type identification of the resource carried in the response message; and scanning the resource to determine that the resource includes the second domain name address.

In one embodiment, scanning the resource to determine that the resource includes the second domain name address includes: scanning the resource with a regular expression, and determining that the resource includes the second domain name address if it is determined that a string in the resource matches the regular expression; where the regular expression is a preset string with a characteristic of the second domain name address.

In one embodiment, encoding the second domain name address in the resource to obtain the encoded domain name address includes: replacing a dot separator in the second domain name address with a special character to obtain a replaced domain name address, where the special character is any character in a set of characters allowed by an international domain name other than the dot separator; and determining the encoded domain name address according to the replaced domain name address and the preset domain name.

In one embodiment, the replaced domain name address includes a replaced prefix and original path information; determining the encoded domain name address according to the replaced domain name address and the preset domain name includes: superposing the replaced domain name address and the preset domain name to obtain the encoded domain name address, where the encoded domain name address is the replaced prefix, the preset domain name, and the original path information in sequence.

### BRIEF DESCRIPTION OF THE DRAWINGS

Exemplary descriptions of one or more embodiments are described below through the features in the accompanying drawings corresponding to the one or more embodiments. These exemplary descriptions do not constitute a limitation to the embodiments. And elements with the same reference numerals in the drawings are represented as similar elements. Unless otherwise stated, the figures in the drawings do not constitute a scale limitation.
FIG. 1 is a flowchart of a method for acquiring a resource according to a first embodiment of the present disclosure;
FIG. 2 is a flowchart of a method for acquiring a resource according to a second embodiment of the present disclosure;
FIG. 3 is a flowchart of a method for returning a resource according to a third embodiment of the present disclosure;
FIG. 4 is a flowchart of a method for returning a resource according to a fourth embodiment of the present disclosure;
FIG. 5 is a structural diagram of an Internet topology according to a fifth embodiment of the present disclosure;
FIG. 6 is a flowchart of a method for acquiring a resource using an Internet topology according to the fifth embodiment of present disclosure;
FIG. 7 is a schematic structural diagram of a server according to the fifth embodiment of the present disclosure.

### DETAILED DESCRIPTION

In order to clarify objectives, technical solutions and advantages of the embodiments of the present disclosure, the embodiments of the present disclosure are described below in detail in combination with the accompanying drawings. However, those of ordinary skills in the art may understand that many technical details have been provided in the embodiments of the present disclosure so that readers may understand the present disclosure better. However, the technical solutions claimed in the present disclosure may also be realized without these technical details and various changes and modifications based on the following embodiments.

The following embodiments are divided for the convenience of description and shall not constitute any limitation to specific implementations of the present disclosure. Each embodiment may be combined and referred to each other on the premise of no contradiction.

The terms "first", "second" in the description, claims, and the above drawings in the present disclosure are used to distinguish similar objects, and need not to be used to describe a particular sequence or an order of precedence. It should be appreciated that the data used in this way may be interchanged where appropriate so that the embodiments described here may be implemented in a sequence other than what is illustrated or described here. Besides, the terms "include", "comprise" or "have" and any variants thereof aim to cover non-exclusive inclusions. For example, processes, methods, systems, products, or devices that contain a series of steps or units need not to be limited to those clearly-listed steps or units, but may include other steps or units that are nor clearly listed or inherent to these processes, methods, products, or devices.

A first embodiment of the present disclosure relates to a method for acquiring a resource. By introducing a rewrite server between a CDN server and a resource server, a domain name address of the resource requested by a client which belongs to a preset domain name may be directed to the resource server corresponding to the resource that is requested through the rewrite server, without changing a function of each of internal nodes in a CDN network or changing the way the resource server processes contents of a page file. In this case, resources that are not in the same domain may be accessed by the client, thereby improving the customer experience, reducing the cost, and upgrading the Internet communication protocol supported by the website.

The implementation details of the method for acquiring the resource in this embodiment are described in detail below, and the following contents are just for the convenience of understanding the implementation details of the solution and not necessary for the implementation of the solution.

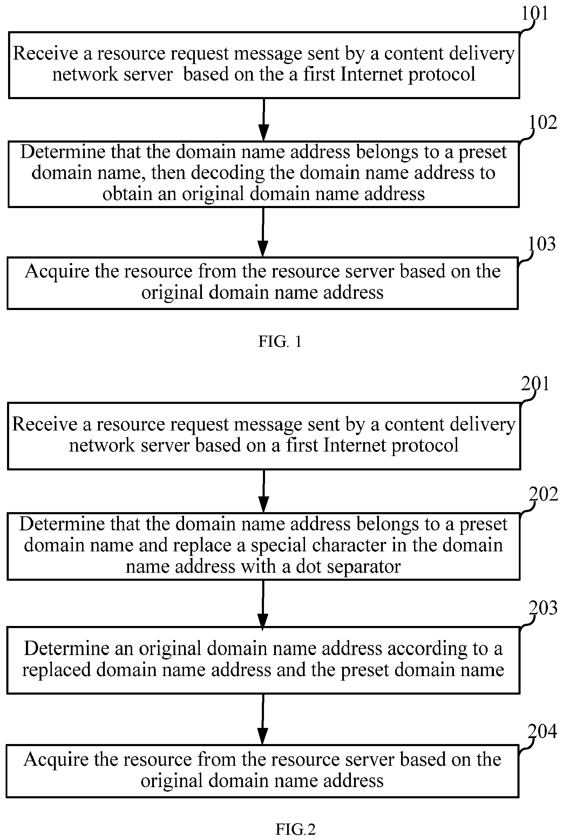

FIG. 1 shows a flowchart of the method acquiring the resource in this embodiment, which may be applied to the rewrite server. The method may include the following steps.

In step 101, a resource request message sent by a content delivery network server based on a first Internet protocol is received.

Herein, the resource request message includes the domain name address of the resource that is requested, as well as an Internet protocol address and a port number of the resource server; the domain name address of the resource belongs to a white list, and the white list includes a preset domain name supporting domain name conversion.

In a specific implementation, the white list may be the domain name address corresponding to the website served by the CDN, or may be the domain name address which opens a rewrite function corresponding to the rewrite server in the CDN. For example, a website address of a network company A is "www.asdf.com" and the network company A opens the rewrite function corresponding to the rewrite server in the CDN, then the website address "www.asdf.com" of the network company A may be added to the white list.

In a specific implementation, the client accesses a web page of the website and sends the resource request message to the content delivery network (CDN) server to obtain the resource that is requested in the web page of the website. The CDN server receives the resource request message sent by the client. For example, the resource request message is a hyper text transport protocol (HTTP) request message. The CDN server judges whether a HOST address carried in the HTTP request message is included in the white list. If the CDN server determines that the HOST address is included in the white list and a network environment where the client is located supports the first Internet protocol, for example, if the client supports IPv6, the CDN server may forward the HTTP request message to the rewrite server. Herein, the HTTP request message includes an Internet protocol (IP) address and a port number of the resource server to facilitate the rewrite server back to the source, that is, return to the resource server to obtain the resource that is requested according to the IP address and the port number of the resource server. For example, the IP address of the resource server is 192.168.1.2 and the port number is 5500, then the rewrite server may access the resource server corresponding to the address "192.168.1.2:5500" to obtain the resource required by the client. If the CDN server determines that the HOST address is not in the white list, the HTTP request message may back to the source in a normal way.

It should be noted that the web page of the website accessed by the client includes various resources, and the resources may be HTML files, JS script files, CSS files, or the like, which are not limited here and are specifically determined depends on corresponding website contents.

In a specific implementation, the Secure Sockets Layer (SSL) protocol certificate of a domain name address is configured on CDN server, and the SSL protocol certificate supports the formats of HTTP and the Hyper Text Transfer Protocol over Secure Socket Layer (HTTPS).

In step 102, if it is determined that the domain name address belongs to the preset domain name, the domain name address is decoded to obtain an original domain name address.

In a specific implementation, the rewrite server judges whether the HOST address carried in the HTTP request message belongs to the preset domain name after receiving the HTTP request, and the preset domain name is an extensive domain name set in advance. For example, an independent domain name "abc.com" is applied for in advance; the extensive domain name "^{∗}.abc.com" corresponding to the independent domain name "abc.com" is acquired to enable all domain addresses belonging to the extensive domain name to be directed to the rewrite server, so as to acquire the resource that is requested through the rewrite server; the rewrite server decodes the HOST address in the HTTP request message and restores the HOST address to the original domain name address if the HOST address carried in the HTTP request message matches the preset domain name.

It should be noted that the original domain name address is used to access the resource server supporting a second Internet protocol, and a version of the first Internet protocol is higher than that of the second Internet protocol. For example, the first Internet protocol is IPv6, and the second Internet protocol is IPv4.

In step 103, the resource is obtained from the resource server according to the original domain name address.

In a specific implementation, the rewrite server accesses the resource server corresponding to the resource that is requested according to the original domain name address after obtaining the original domain name address by decoding, and the resource server returns the resource required by the rewrite server to the rewriting server, so that the rewrite server may obtain the resource.

In this embodiment, by introducing the rewrite server between the CDN server and the resource server, the domain name address of the resource requested by the client which belongs to the preset domain name may be directed to the resource server corresponding to the resource that is requested through the rewrite server, without changing a function of each of internal nodes in the CDN network or changing the way the resource server processes contents of a page file. In this case, resources that are not in the same domain may be accessed by the client, thereby improving the customer experience, reducing the cost, and upgrading Internet communication protocol supported by the website.

A second embodiment of the present disclosure relates to a method for acquiring a resource. The second embodiment is substantially the same as the first embodiment, and the main differences are as follows. That is, a special character in a domain name address is replaced with a dot separator, and an original domain name address is determined according to a replaced domain name address and a preset domain name.

A specific processing flow is shown in FIG. 2. In this embodiment, the method for acquiring the resource includes steps 201 to 204. Since step 201 in this embodiment is the same as step 101 in the first embodiment and step 204 in this embodiment is the same as step 103 in the first embodiment, the details are not repeated here and steps 202 to 203 in this embodiment may be described below in detail.

In step 202, if it is determined that the domain name address belongs to the preset domain name, the special character in the domain name address is replaced with the dot separator.

It should be noted that the domain name address is an encoded domain name address of the resource to be requested, and the special character is any character in a set of characters allowed by an international domain name other than the dot separator.

In a specific implementation, the dot separator "." is used to replace the special character in the encoded domain name address, such as "---". Then, if the encoded domain name address is "https://www---aaa---com.abc.com/1.js", the replaced domain name address is "https://www.aaa.com.abc.com/1.js". It should be noted that the special character may also be any character in the set of characters allowed by the international domain name other than the dot separator ".".

In step 203, the original domain name address is determined according to the replaced domain name address and the preset domain name.

In a specific implementation, the original domain name address is obtained by deleting the preset domain name contained in the replaced domain name address. For example, if the replaced domain name address is "https:// www.aaa.com.abc.com/1.js" and it is determined that the preset domain name is "abc.com", the original domain name address "https:// www.aaa.com1.js" may be obtained by deleting the preset domain name "abc.com" in the replaced domain name address.

In this embodiment, the special character in the encoded domain name address is replaced with the dot separator and the preset domain name therein is deleted, so as to obtain the original domain name address, restore the encoded domain name address, and enable the rewrite server to obtain the resource required by the client from the resource server corresponding to the resource that is requested according to the original domain name address that is restored. In this case, the client in an IPv6 environment may access the resource that is not in the same domain as the client, thus bringing good customer experience to customers.

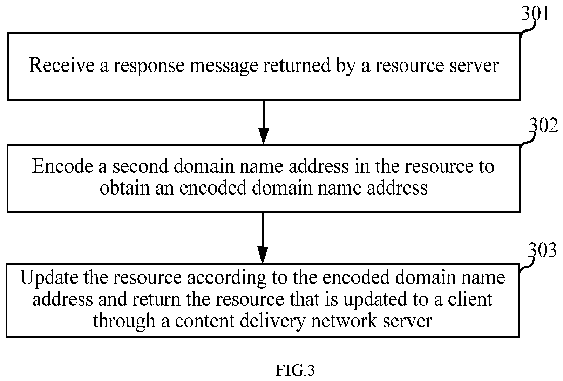

A third embodiment of the present disclosure relates to a method for returning a resource. FIG.3 shows a flowchart of the method for returning the resource in this embodiment. The method may be applied to a rewrite server, which includes the following steps.

In step 301, a response message returned by a resource server is received.

The response message carries the resource obtained according to a first domain name address.

In a specific implementation, the rewrite server sends the resource request message to the resource server corresponding to the resource that is requested according to the first domain name address. The resource server returns the response message corresponding to the resource request message after receiving the resource request message sent by the rewriting server. The response message carries the resource that is requested, and the resource may be HTML files, JS script files, CSS files, or the like, which are not limited here and are specifically determined depends on corresponding website contents.

In step 302, a second domain name address in the resource is encoded to obtain an encoded domain name address.

The first domain name address and the second domain name address do not belong to the same domain, and the encoded domain name address belongs to a preset domain name.

It should be noted that the first domain name address is used to access the resource server supporting a first Internet protocol, the second domain name address is used to access the resource server supporting a second Internet protocol, and a version of the first Internet protocol is higher than that of the second Internet protocol. For example, the first Internet protocol is IPv6, and the second Internet protocol is IPv4.

In a specific implementation, the following method is used to encode the second domain name address in the resource. A dot separator in the second domain name address is replaced with a special character to obtain a replaced domain name address, and the special character is any character in a set of characters allowed by an international domain name other than the dot separator. An encoded domain name address is determined according to the replaced domain name address and the preset domain name.

Herein, the replaced domain name address includes a replaced prefix and original path information. The replaced domain name address and the preset domain name are superposed to obtain the encoded domain name address. The encoded domain name address is the replaced prefix, the preset domain name and the original path information in sequence.

For example, the second domain name address in the resource is "https://www.aaa.com/1.js", and the special character is "---". The dot separator "." therein is replaced with the special character "---", then the second domain name address that is replaced is "https://www---aaa---com/1.js". Herein, "www---aaa---com" represents the replaced prefix, and "/1.js" represents the original path information. Then the second domain name address that is replaced "https://www---aaa---com/1.js" is superposed with the preset domain name "abc.com" to get the encoded domain name address "https://www---aaa---com.abc.com/1.js". The special character may also be any character in the set of characters allowed by the international domain name other than the dot separator ".".

In step 303, the resource is updated according to the encoded domain name address, and the resource that is updated is returned to a client through a content delivery network server.

In a specific implementation, the encoded domain name address is used to replace the second domain name address in the resource to obtain the resource that is updated. For example, the encoded domain name address is "https://www--aaa-- com.abc.com/1.js", while the second domain name address in the resource is "https://www.aaa.com/1.js", then the domain name address "https://www--aaa-- com.abc.com/1.js" is used to replace the domain name address "https://www.aaa.com/1.js", thus obtaining the resource that is updated. It should be noted that the resource includes more than one second domain name address, possibly two, three or even more. As long as all second domain name addresses included in the resource are replaced with encoded domain name addresses corresponding to all the second domain name addresses, the resource that is updated may be obtained. Then the resource that is updated is returned to the client through the CDN server, thus enabling the client to obtain the required resource. Besides, the second domain name addresses included in the resource are all accessible through the CDN server and the rewrite server.

In this embodiment, by introducing the rewrite server between the CDN server and the resource server, the domain name address of the resource requested by the client which belongs to the preset domain name may be directed to the resource server corresponding to the resource that is requested through the rewrite server, without changing a function of each of internal nodes in the CDN network or changing the way the resource server processes contents of a page file. In this case, resources that are not in the same domain may be accessed by the client, thereby improving the customer experience, reducing the cost, and upgrading the Internet communication protocol supported by the website.

A fourth embodiment of the present disclosure relates to a method for returning a resource. The fourth embodiment is substantially the same as the third embodiment, and the main differences are as follows. A second domain name address in the resource is encoded after a response message returned by a resource server is received. And before an encoded domain name address is obtained, it is also needed to determine that a type of the resource is a text-type and scan the resource of the text-type to determine that the resource includes the second domain name address.

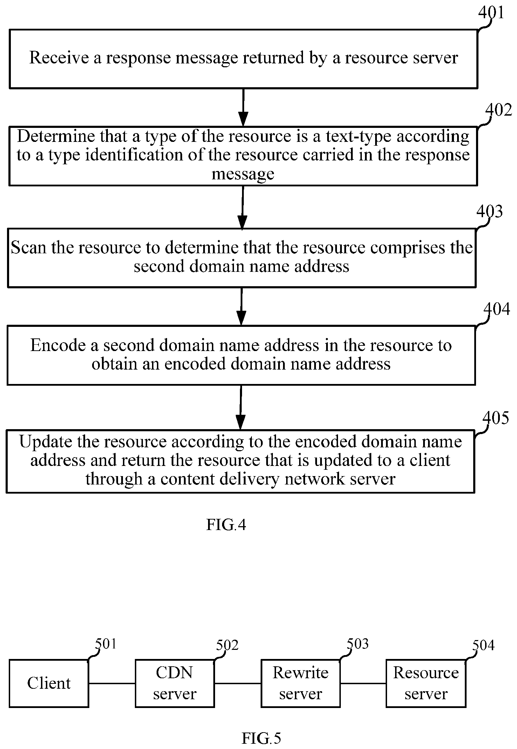

A specific processing flow is shown in FIG. 4. In this embodiment, the method for returning the resource includes steps 401 to 405. Herein, step 401 is the same as step 301 in the third embodiment and step 404 to 405 is the same as step 302 to 303 in the third embodiment, the details are not repeated here and steps 402 to 403 in this embodiment may be described below in detail.

In step 402, the type of the resource is determined as the text-type according to a type identification of the resource carried in the response message. It should be noted that the resource carried in the response message may be various types of resources, such as text files, image resources, or the like. The type of the resource may be determined according to the type identification of the resource carried in the response message. For example, the type identification of the resource carried in a message header of the response message is a "content-type". The text-type is set as text/html, application/javascript, or text/css, and an image-type is set as image/jpeg. If the content-type is equal to text/html, application/javascript, or text/css, the type of the resource is the text-type.

In step 403, the resource is scanned to determine that the resource includes the second domain name address.

In a specific implementation, if it is determined that the type of the resource is the text-type, the resource is scanned with a regular expression. If it is determined that a string in the resource matches the regular expression, it is determined that the resource includes the second domain name address. Herein, the regular expression is a preset string with a characteristic of the second domain name address.

For example, the regular expression is set as "http://^{∗}.aaa.com", and then strings in the resource of the text-type are sequentially extracted. If an extracted string matches the regular expression, that is, the extracted string includes the string ".aaa.com" with the characteristic of the second domain name address, it means that the extracted string belongs to the second domain name address and it is determined that the resource of the text-type includes the second domain name address.

In this implementation method, it is determined that the resource of the text-type includes the second domain name address by scanning the resource of the text-type with the regular expression. Then the second domain name address is encoded, and the encoded domain name address is used to replace the second domain name address corresponding to the encoded domain name address. The resource that is updated is returned to the client in a first Internet protocol environment, so that the client may access the resource of the resource server that supports a second Internet protocol and is not in the same domain as the client, thus bringing good customer experience to customers.

The steps of various methods described above are divided for clear description only, which may be combined into one step or some of which may be divided into several steps during implementation. These steps are all included in the protection scope of the present disclosure as long as they include the same logical relationship. The core designs, in which insignificant modifications are added or insignificant designs are introduced to an algorithm or a process without changing the algorithm and the process, are all within the protection scope of the present disclosure.

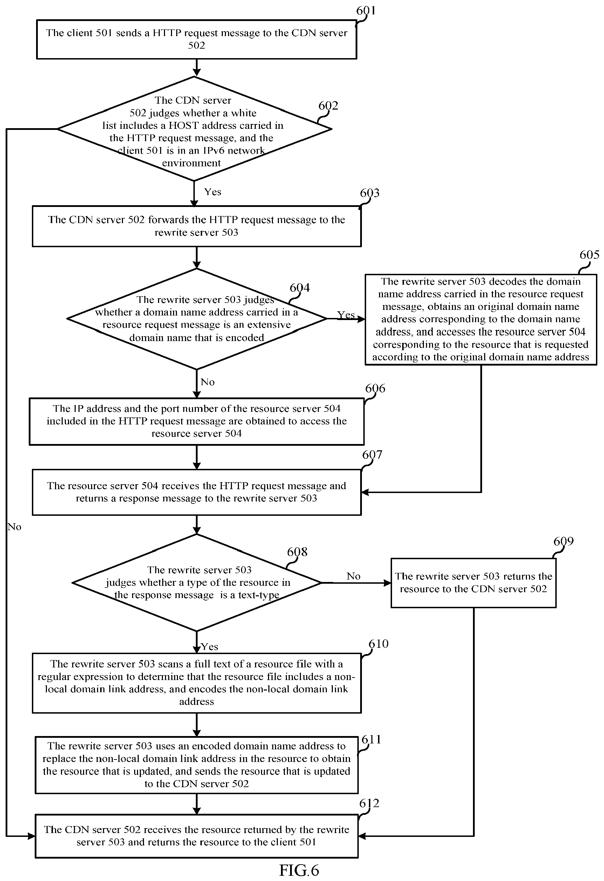

A fifth embodiment of the present disclosure provides an Internet topology. As shown in FiG.5, the Internet topology includes a client 501, a CDN server 502, a rewrite server 503 and a resource server 504. The flows shown in FiG.6 are used to obtain a resource requested by the client 501.

In step 601, the client 501 sends a HTTP request message to the CDN server 502.

The HTTP request message is used to request access to a web page of a website.

In step 602, the CDN server 502 judges whether a white list includes a HOST address carried in the HTTP request message, and the client 501 is in an IPv6 network environment. If it is determined that the HOST address is in the white list and the client 501 supports IPv6, step 603 may be performed; otherwise, step 612 may be performed.

In step 603, the CDN server 502 forwards the HTTP request message to the rewrite server 503.

The HTTP request message includes an IP address and a port number of the resource server 504 to facilitate the rewrite server 503 to back to the source.

In step 604, the rewrite server 503 judges whether a domain name address carried in a resource request message is an extensive domain name that is encoded. If so, step 606 may be performed; otherwise, step 605 may be performed.

In step 605, the rewrite server 503 decodes the domain name address carried in the resource request message, obtains an original domain name address corresponding to the domain name address, and accesses the resource server 504 corresponding to the resource that is requested according to the original domain name address.

In step 606, the IP address and the port number of the resource server 504 included in the HTTP request message are obtained to access the resource server 504.

It should be noted that the resource server 504 is in an IPv4 network environment and is not in the same domain as the client 501.

In step 607, the resource server 504 receives the HTTP request message and returns a response message to the rewrite server 503.

The response message includes the resource that is requested.

In step 608, the rewrite server 503 judges whether a type of the resource in the response message is a text-type. If so, step 610 may be performed; otherwise, step 609 may be performed.

In step 609, the rewrite server 503 returns the resource to the CDN server 502.

In step 610, the rewrite server 503 scans a full text of a resource file with a regular expression to determine that the resource file includes a non-local domain link address, and encodes the non-local domain link address.

After the scan of the resource file is completed, the rewrite server 503 obtains all non-local domain link addresses included in the resource file and encodes each of the non-local domain link addresses.

In step 611, the rewrite server 503 uses an encoded domain name address to replace the non-local domain link address in the resource to obtain the resource that is updated, and sends the resource that is updated to the CDN server 502.

In step 612, the CDN server 502 receives the resource returned by the rewrite server 503 and returns the resource to the client 501.

In this embodiment, the rewrite server is introduced between the CDN server and the resource server without changing a function of each of internal nodes in the CDN network or changing the way the resource server processes contents of a page file. Compared with a traditional CDN modification solution, the cost may be reduced so that the website may be upgraded from IPv4 to IPv6.

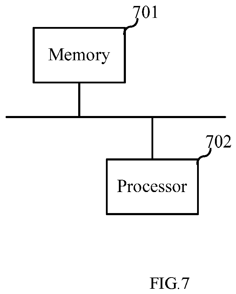

A sixth embodiment of the present disclosure provides a server, and a specific structure of this device is shown in FIG.7. The server includes at least one processor 701 and a memory 702 in communicative connection with the at least one processor 701. The memory 702 stores an instruction executable by the at least one processor 701, and the instruction is executed by the at least one processor 701 to cause the at least one processor 701 to perform the method for acquiring the resource described in either of the first embodiment and the second embodiment, or perform the method for returning the resource described in either of the third embodiment and the fourth embodiment.

It should be noted that the server may be the server performing the method for acquiring the resource described in the first embodiment or the second embodiment, or may be the server performing the method for returning the resource described in the third embodiment or the fourth embodiment, or may be the server both performing the method for acquiring the resource described in the first embodiment or the second embodiment and the method for returning the resource described in the third embodiment or the fourth embodiment.

In this embodiment, a central processing unit (CPU) is taken as an example of the processor 701, and a random access memory (RAM) is taken as an example of the memory 702. The processor 701 and the memory 702 may be connected by a bus or in other ways. FIG.7 provides an example of the connection via the bus. As a non-volatile computer readable storage medium, the memory 702 may be used to store a non-volatile software program, a non-volatile computer executable program and a module. For example, the program implementing the method for acquiring the resource in the embodiment of the present disclosure is stored in the memory 702. By running the non-volatile software program, the instruction and the module stored in the memory 702, the processor 701 performs various functional applications and data processing of the device, i.e. implementing the method for acquiring the resource or the method for returning the resource described above.

The memory 702 may include a storage program area and a storage data area. The storage program area may store an operating system, an application required for at least one function, and the storage data area may store a list of options, etc. In addition, the memory may include a high-speed RAM, and may further include a non-volatile memory, such as at least one magnetic disk storage device, flash memory device, or other non-volatile solid state memory device. In some embodiments, the memory 702 may optionally include the memories that are set remotely relative to the processor 701, and these remote memories may be connected to an external device via network.

One or more program modules are stored in the memory 702. The one or more program modules, when executed by one or more processors 701, may perform the method for acquiring the resource in any one of the above embodiments or perform the method for returning the resource in any one of the above embodiments.

The above products may perform the methods provided in the embodiments of the present disclosure and have corresponding functional modules and beneficial effects to perform the methods. For the technical details not described in detail in the embodiments, reference may be made to the method provided in the embodiments of the present disclosure.

A seventh embodiment of the present disclosure relates to a computer readable storage medium storing a computer program. And the computer program, when executed by a processor, performs the method for acquiring the resource or the method for returning the resource in any one of the method embodiments of the present disclosure.

Those skilled in the art may appreciate that all or some of the steps implementing the method of the above embodiments may be completed by instructing a related hardware through a program. The program is stored in a storage medium, which includes several instructions configured to enable a device (may be a single-chip microcomputer, chip, and the like.) or a processor to perform all or some of steps of the method in each of the embodiments of the present disclosure. The above storage medium includes various media capable of storing program codes, such as a USB flash drive, a mobile hard disk, a read-only memory (ROM), a random access memory (RAM), a magnetic disk or an optical disc.

Those of ordinary skills in the art should appreciate that the embodiments described above are some of the embodiments for implementing the present disclosure. However, in actual application, many changes may be made in forms and details of the embodiments without departing from the scope of the present disclosure.

## Claims

1. A method for acquiring a resource, applied to a rewrite server (503), comprising:
receiving (101, 201) a resource request message sent by a content delivery network server (502) based on a first Internet protocol, wherein the resource request message comprises a first domain name address of the resource that is requested;
determining (102, 202) that the first domain name address belongs to a preset domain name, then decoding the first domain name address to obtain a decoded domain name address, wherein the decoded domain name address is used to access a resource server (504) supporting a second Internet protocol;
acquiring (103, 204) the resource from the resource server (504) based on the decoded domain name address;
receiving (301, 401) a response message returned by the resource server (504), wherein the response message carries the resource obtained according to the decoded domain name address;
encoding (302, 404) a second domain name address in the resource to obtain an encoded domain name address, wherein the first domain name address and the second domain name address do not belong to the same domain and the encoded domain name address belongs to the preset domain name; wherein the second domain name address is used to access the resource server (504) supporting the second Internet protocol; and
updating (303, 405) the resource according to the encoded domain name address and returning the resource that is updated to a client (501) through the content delivery network server (502).

2. The method for acquiring the resource according to claim 1, wherein a version of the first Internet protocol is higher than that of the second Internet protocol, and the first Internet Protocol is Internet Protocol Version 6, IPv6.

3. The method for acquiring the resource according to claim 1 or 2, wherein the first domain name address of the resource belongs to a white list, and the white list comprises a preset domain name supporting domain name conversion.

4. The method for acquiring the resource according to claim 3, wherein the resource request message further comprises an Internet protocol address and a port number of the resource server (504).

5. The method for acquiring the resource according to claim 1, wherein decoding the first domain name address to obtain the decoded domain name address comprises:
replacing a special character in the first domain name address with a dot separator, wherein the special character is any character in a set of characters allowed by an international domain name other than the dot separator; and
determining (203) the decoded domain name address according to a replaced domain name address and the preset domain name.

6. The method for acquiring the resource according to claim 5, wherein determining the decoded domain name address according to the replaced domain name address and the preset domain name comprises:
deleting the preset domain name contained in the replaced domain name address to obtain the decoded domain name address.

7. The method for acquiring the resource according to claim 1, wherein after receiving the response message returned by the resource server and before encoding the second domain name address in the resource to obtain the encoded domain name address, the method further comprises:
determining (402) that a type of the resource is a text-type according to a type identification of the resource carried in the response message; and
scanning (403) the resource to determine that the resource comprises the second domain name address.

8. The method for acquiring the resource according to claim 7, wherein scanning the resource to determine that the resource comprises the second domain name address comprises:
scanning the resource with a regular expression, and determining that the resource comprises the second domain name address if it is determined that a string in the resource matches the regular expression, wherein the regular expression is a preset string with a characteristic of the second domain name address.

9. The method for acquiring the resource according to claim 8, wherein encoding the second domain name address in the resource to obtain the encoded domain name address comprises:
replacing a dot separator in the second domain name address with a special character to obtain a replaced domain name address, wherein the special character is any character in a set of characters allowed by an international domain name other than the dot separator; and
determining the encoded domain name address according to the replaced domain name address and the preset domain name.

10. The method for acquiring the resource according to claim 9, wherein the replaced domain name address comprises a replaced prefix and original path information;
determining the encoded domain name address according to the replaced domain name address and the preset domain name comprises:
superposing the replaced domain name address and the preset domain name to obtain the encoded domain name address, wherein the encoded domain name address is the replaced prefix, the preset domain name, and the original path information in sequence.

11. A server, comprising:
at least one processor; and
a memory in communicative connection with the at least one processor;
wherein the memory stores an instruction executable by the at least one processor, and the instruction is executed by the at least one processor to cause the at least one processor to perform the method for acquiring the resource according to any one of claims 1 to 10.

12. A computer readable storage medium storing a computer program, wherein the computer program, when executed by a processor, performs the method for acquiring the resource according to any one of claims 1 to 10.

## Patentansprüche

1. Verfahren zum Erfassen einer Ressource, das auf einen Umschreibungsserver (503) angewendet wird und Folgendes umfasst:
Empfangen (101, 201) einer Ressourcenanforderungsnachricht, die von einem Inhaltsübergabenetzwerkserver (502) auf Basis eines ersten Internetprotokolls gesendet wird, wobei die Ressourcenanforderungsnachricht eine erste Domänennamensadresse der Ressource umfasst, die angefordert wird;
Bestimmen (102, 202), dass die erste Domänennamensadresse zu einem voreingestellten Domänennamen gehört, dann Decodieren der ersten Domänennamensadresse, um eine decodierte Domänennamensadresse zu erhalten, wobei die decodierte Domänennamensadresse verwendet wird, um auf einen Ressourcenserver (504) zuzugreifen, der ein zweites Internetprotokoll unterstützt;
Erfassen (103, 204) der Ressource vom Ressourcenserver (504) auf Basis der decodierten Domänennamensadresse;
Empfangen (301, 401) einer Antwortnachricht, die vom Ressourcenserver (504) zurückgegeben wird, wobei die Antwortnachricht die Ressource enthält, die gemäß der decodierten Domänennamensadresse erhalten wird;
Codieren (302, 404) einer zweiten Domänennamensadresse in der Ressource, um eine codierte Domänennamensadresse zu erhalten, wobei die erste Domänennamensadresse und die zweite Domänennamensadresse nicht zur selben Domäne gehören und die codierte Domänennamensadresse zum voreingestellten Domänennamen gehört; wobei die zweite Domänennamensadresse verwendet wird, um auf den Ressourcenserver (504) zuzugreifen, der das zweite Internetprotokoll unterstützt; und
Aktualisieren (303, 405) der Ressource gemäß der codierten Domänennamensadresse und Zurückgeben der Ressource, die aktualisiert wurde, über den Inhaltsübergabenetzwerkserver (502) an einen Client (501).

2. Verfahren zum Erfassen der Ressource nach Anspruch 1, wobei eine Version des ersten Internetprotokolls höher ist als die des zweiten Internetprotokolls und das erste Internetprotokoll das Internetprotokoll Version 6, IPv6, ist.

3. Verfahren zum Erfassen der Ressource nach Anspruch 1 oder 2, wobei die erste Domänennamensadresse der Ressource zu einer Weißliste gehört und die Weißliste einen voreingestellten Domänennamen umfasst, der eine Domänennamensumwandlung unterstützt.

4. Verfahren zum Erfassen der Ressource nach Anspruch 3, wobei die Ressourcenanforderungsnachricht ferner eine Internetprotokolladresse und eine Portnummer des Ressourcenservers (504) umfasst.

5. Verfahren zum Erfassen der Ressource nach Anspruch 1, wobei das Decodieren der ersten Domänennamensadresse, um die decodierte Domänennamensadresse zu erhalten, Folgendes umfasst:
Ersetzen eines speziellen Zeichens in der ersten Domänennamensadresse durch ein Punkttrennzeichen, wobei das spezielle Zeichen außer dem Punkttrennzeichen ein beliebiges Zeichen in einem Satz von Zeichen ist, die in einem internationalen Domänennamen erlaubt sind; und
Bestimmen (203) der decodierten Domänennamensadresse gemäß einer ersetzten Domänennamensadresse und dem voreingestellten Domänennamen.

6. Verfahren zum Erfassen der Ressource nach Anspruch 5, wobei das Bestimmen der decodierten Domänennamensadresse gemäß der ersetzten Domänennamensadresse und dem voreingestellten Domänennamen Folgendes umfasst:
Löschen des voreingestellten Domänennamens, der in der ersetzten Domänennamensadresse enthalten ist, um die decodierte Domänennamensadresse zu erhalten.

7. Verfahren zum Erfassen der Ressource nach Anspruch 1, wobei das Verfahren nach dem Empfangen der Antwortnachricht, die vom Ressourcenserver zurückgegeben wird, und vor dem Codieren der zweiten Domänennamensadresse in der Ressource, um die codierte Domänennamensadresse zu erhalten, ferner Folgendes umfasst:
Bestimmen (402), dass ein Typ der Ressource gemäß einer Typidentifikation der Ressource in der Antwortnachricht ein Texttyp ist; und
Scannen (403) der Ressource, um zu bestimmen, dass die Ressource die zweite Domänennamensadresse umfasst.

8. Verfahren zum Erfassen der Ressource nach Anspruch 7, wobei das Scannen der Ressource, um zu bestimmen, dass die Ressource die zweite Domänennamensadresse umfasst, Folgendes umfasst:
Scannen der Ressource mit einem regulären Ausdruck und Bestimmen, dass die Ressource die zweite Domänennamensadresse umfasst, wenn bestimmt wird, dass eine Zeichenfolge in der Ressource mit dem regulären Ausdruck übereinstimmt, wobei der reguläre Ausdruck eine voreingestellte Zeichenfolge mit einer Eigenschaft der zweiten Domänennamensadresse ist.

9. Verfahren zum Erfassen der Ressource nach Anspruch 8, wobei das Codieren der zweiten Domänennamensadresse in der Ressource, um die codierte Domänennamensadresse zu erhalten, Folgendes umfasst:
Ersetzen eines Punkttrennzeichens in der zweiten Domänennamensadresse durch ein spezielles Zeichen, um eine ersetzte Domänennamensadresse zu erhalten, wobei das spezielle Zeichen außer dem Punkttrennzeichenein beliebiges Zeichen in einem Satz von Zeichen ist, die in einem internationalen Domänennamen erlaubt sind; und
Bestimmen der codierten Domänennamensadresse gemäß der ersetzten Domänennamensadresse und dem voreingestellten Domänennamen.

10. Verfahren zum Erfassen der Ressource nach Anspruch 9, wobei die ersetzte Domänennamensadresse ein ersetztes Präfix und Originalpfadinformationen umfasst;
das Bestimmen der codierten Domänennamensadresse gemäß der ersetzten Domänennamensadresse und dem voreingestellten Domänennamen umfasst Folgendes:
Überlagern der ersetzten Domänennamensadresse und der voreingestellten Domänennamensadresse, um die codierte Domänennamensadresse zu erhalten, wobei die codierte Domänennamensadresse in Folge das ersetzte Präfix, der voreingestellte Domänenname und die Originalpfadinformationen ist.

11. Server, der Folgendes umfasst:
mindestens einen Prozessor; und
einen Speicher in kommunikativer Verbindung mit dem mindestens einen Prozessor;
wobei im Speicher eine Anweisung gespeichert ist, die von dem mindestens einen Prozessor ausführbar ist, und die Anwendung von dem mindestens einen Prozessor ausgeführt wird, um zu bewirken, dass der mindestens eine Prozessor das Verfahren zum Erfassen der Ressource nach einem der Ansprüche 1 bis 10 durchführt.

12. Computerlesbares Speichermedium, auf dem ein Computerprogramm gespeichert ist, wobei das Computerprogramm, wenn es von einem Prozessor ausgeführt wird, das Verfahren zum Erfassen der Ressource nach einem der Ansprüche 1 bis 10 durchführt.

## Revendications

1. Procédé d'acquisition d'une ressource, appliqué à un serveur de réécriture (503), comprenant :
la réception (101, 201) d'un message de demande de ressource envoyé par un serveur de réseau de livraison de contenu (502) sur la base d'un premier protocole Internet, dans lequel le message de demande de ressource comprend une première adresse de nom de domaine de la ressource qui est demandée ;
la détermination (102, 202) du fait que la première adresse de nom de domaine appartient à un nom de domaine prédéfini, puis le décodage de la première adresse de nom de domaine pour obtenir une adresse de nom de domaine décodée, dans lequel l'adresse de nom de domaine décodée est utilisée pour accéder à un serveur de ressource (504) prenant en charge un deuxième protocole Internet ;
l'acquisition (103, 204) de la ressource à partir du serveur de ressource (504) sur la base de l'adresse de nom de domaine décodée ;
la réception (301, 401) d'un message de réponse renvoyé par le serveur de ressource (504), dans lequel le message de réponse porte la ressource obtenue selon l'adresse de nom de domaine décodée ;
le codage (302, 404) d'une deuxième adresse de nom de domaine dans la ressource pour obtenir une adresse de nom de domaine codée, dans lequel la première adresse de nom de domaine et la deuxième adresse de nom de domaine n'appartiennent pas au même domaine et l'adresse de nom de domaine codée appartient au nom de domaine prédéfini ; dans lequel la deuxième adresse de nom de domaine est utilisée pour accéder au serveur de ressource (504) prenant en charge le deuxième protocole Internet ; et
la mise à jour (303, 405) de la ressource selon l'adresse de nom de domaine codée et le renvoi de la ressource qui est mise à jour à un client (501) par l'intermédiaire du serveur de réseau de livraison de contenu (502).

2. Procédé d'acquisition de la ressource selon la revendication 1, dans lequel une version du premier protocole Internet est supérieure à celle du deuxième protocole Internet, et le premier protocole Internet est un protocole Internet version 6, IPv6.

3. Procédé d'acquisition de la ressource selon la revendication 1 ou 2, dans lequel la première adresse de nom de domaine de la ressource appartient à une liste blanche, et la liste blanche comprend un nom de domaine prédéfini prenant en charge la conversion de nom de domaine.

4. Procédé d'acquisition de la ressource selon la revendication 3, dans lequel le message de demande de ressource comprend en outre une adresse de protocole Internet et un numéro de port du serveur de ressource (504).

5. Procédé d'acquisition de la ressource selon la revendication 1, dans lequel le décodage de la première adresse de nom de domaine pour obtenir l'adresse de nom de domaine décodée comprend :
le remplacement d'un caractère spécial dans la première adresse de nom de domaine par un séparateur de points, dans lequel le caractère spécial est un caractère quelconque d'un ensemble de caractères autorisés par un nom de domaine international autre que le séparateur de points ; et
la détermination (203) de l'adresse de nom de domaine décodée selon une adresse de nom de domaine remplacée et le nom de domaine prédéfini.

6. Procédé d'acquisition de la ressource selon la revendication 5, dans lequel la détermination de l'adresse de nom de domaine décodée selon l'adresse de nom de domaine remplacée et le nom de domaine prédéfini comprend :
l'effacement du nom de domaine prédéfini contenu dans l'adresse de nom de domaine remplacée pour obtenir l'adresse de nom de domaine décodée.

7. Procédé d'acquisition de la ressource selon la revendication 1, dans lequel après la réception du message de réponse renvoyé par le serveur de ressource et avant le codage de la deuxième adresse de nom de domaine dans la ressource pour obtenir l'adresse de nom de domaine codée, le procédé comprend en outre :
la détermination (402) du fait qu'un type de la ressource est un type texte selon une identification de type de la ressource portée dans le message de réponse ; et
l'analyse (403) de la ressource pour déterminer que la ressource comprend la deuxième adresse de nom de domaine.

8. Procédé d'acquisition de la ressource selon la revendication 7, dans lequel l'analyse de la ressource pour déterminer que la ressource comprend la deuxième adresse de nom de domaine comprend :
l'analyse de la ressource par une expression régulière, et déterminer que la ressource comprend la deuxième adresse de nom de domaine s'il est déterminé qu'une chaîne dans la ressource concorde avec l'expression régulière, dans lequel l'expression régulière est une chaîne prédéfinie avec une caractéristique de la deuxième adresse de nom de domaine.

9. Procédé d'acquisition de la ressource selon la revendication 8, dans lequel le codage de la deuxième adresse de nom de domaine dans la ressource pour obtenir l'adresse de nom de domaine codée comprend :
le remplacement d'un séparateur de points dans la deuxième adresse de nom de domaine par un caractère spécial pour obtenir une adresse de nom de domaine remplacée, dans lequel le caractère spécial est un caractère quelconque d'un ensemble de caractères autorisés par un nom de domaine international autre que le séparateur de points ; et
la détermination de l'adresse de nom de domaine codée selon l'adresse de nom de domaine remplacée et le nom de domaine prédéfini.

10. Procédé d'acquisition de la ressource selon la revendication 9, dans lequel l'adresse de nom de domaine remplacée comprend un préfixe remplacé et des informations de chemin d'origine ;
la détermination de l'adresse de nom de domaine codée selon l'adresse de nom de domaine remplacée et le nom de domaine prédéfini comprend :
la superposition de l'adresse de nom de domaine remplacée et du nom de domaine prédéfini pour obtenir l'adresse de nom de domaine codée, dans lequel l'adresse de nom de domaine codée est le préfixe remplacé, le nom de domaine prédéfini, et les informations de chemin d'origine en séquence.

11. Serveur, comprenant :
au moins un processeur ; et
une mémoire en connexion communicative avec l'au moins un processeur ;
dans lequel la mémoire stocke une instruction exécutable par l'au moins un processeur, et l'instruction est exécutée par l'au moins un processeur pour amener l'au moins un processeur à réaliser le procédé d'acquisition de la ressource selon l'une quelconque des revendications 1 à 10.

12. Support de stockage lisible par ordinateur stockant un programme informatique, dans lequel le programme informatique, lorsqu'il est exécuté par un processeur, réalise le procédé d'acquisition de la ressource selon l'une quelconque des revendications 1 à 10.
